# EUROPEAN PATENT APPLICATION

(11) **EP 4 697 066 A1**
(43) Date of publication of application: **18.02.2026**
(21) Application number: 25166980.0
(22) Date of filing: 28.03.2025
(51) Int. Cl.: G01S 7/497, G01S 17/89, G01S 17/04, G01S 17/08, G08B 17/103, G08B 21/00, G01S 17/42, G01S 17/66, G08B 17/107

(54) **METHODS FOR CALIBRATING A DETECTION RANGE OF A SENSOR AND METHODS FOR TESTING A SENSOR**

(30) Priority: 16.07.2024 CH 7632024
(71) Applicant: Verity AG, 8050 Zurich (CH)
(72) Inventor: BEFFA, Luciano, 8052 Zürich (CH); HEHN, Markus, 8038 Zürich (CH)
(74) Representative: P&TS SA (AG, Ltd.)

(57) **Abstract**

There is provided a method for calibrating a detection range (104) of one or more sensors (105) that are within a predefined coordinate system (100), the method comprising the steps of: moving an object (102), preferably a mobile robot such as a drone, along a trajectory (101), wherein the trajectory (101) comprises at least a first physical location which is within a predefined estimate (103) of the detection range of the one or more sensors (105), and at least a second physical location which is outside of the detection range; determining the physical location of the object (102), over time, within the predefined coordinate system (100); operating the one or more sensors (105) to detect; identifying a time instant at which the one or more sensors (105) no longer detect the object (102), and/or, identifying a time instant at which the one or more sensors (105) begin to detect the object (102); determining the detection range (104) of the one or more sensors (105) using the physical location (107,118) of the object (102) at the time instant at which the one or more sensors no longer detect the object, and/or, determining the detection range (104) of the one or more sensors (105) using the physical location (106,108) of the object 102 at the time instant at which the one or more sensors begin to detect the object (102). The sensors may comprise motion detectors, presence detectors, distance sensors, proximity sensors, cameras, or optical beam smoke detectors.

## Description

### Field of the invention

The present invention concerns methods for calibrating a detection range of a sensor which involves moving an object along a trajectory which extends beyond a predefined estimate of the detection range of the sensor, and using the physical location of the object at the time instant corresponding to the time instant at which the sensor no longer detects the object to determine the detection range of the sensor. There is further provided methods for testing a sensor that can measure distance, and methods for testing an optical beam smoke detector.

### Background to the invention

Warehouses and other industrial facilities often have sensors, such as, for example, motion sensors, security sensors, optical cameras, optical smoke detectors, proximity sensors, occupancy sensors, temperature sensors. These sensors must be inspected periodically to ensure their functionality. Currently, inspection of these sensors is done manually. Disadvantageously, manual inspection of the sensors is time consuming, requires manpower, and is susceptible to human error. These disadvantages are exasperated when multiple sensors need to be inspected.

If a sensor is not properly calibrated, due to human error for example, then this can lead to failed sensing or inaccurate sensing. Failed or inaccurate sensing by a motion sensor may endanger the lives of people; for example, the motion sensor may fail to notify forklift drivers or autonomous robots of the presence of pedestrians in close proximity. Failed or inaccurate sensing by a fire sensor may result in the presence of fire going undetected, leaving time for the fire to spread. Failed or inaccurate sensing by tracking sensors may result in poor inventory management, such as failure to detect that goods have been moved and/or failure to detect where the goods have been moved to; or failure to detect that goods have not been moved. Thus, it is important that sensors are accurately calibrated.

An aim of the present invention is to mitigate or obviate at least some of the above-mentioned disadvantages associated with existing systems.

### Summary of the invention

According to the present invention there is provided method for calibrating a detection range of one or more sensors that are within a predefined coordinate system, having the steps recited in claim 1.

It should be understood that the one or more sensors may take any suitable form. For example, the one or more sensors may comprise, one or more motion detectors, and/or one or more presence detectors, and/or one or more distance sensors, and/or one or more proximity sensors, and/or one or more cameras, and/or one or more optical beam smoke detectors. It should be understood that the detection range of the one or more sensors may be a one-dimensional range (e.g. of a sensor measuring along a single line, e.g. laser range finder), or 2-dimensional range (i.e. an area), or a 3-dimensional range (i.e. a volume) such as a spherical 3D range. Most preferably the detection range is a 2-dimensional range (i.e. an area) or 3-dimensional range (i.e. a volume).

It should be understood that in the present disclosure the object may take any suitable form. In an embodiment the object may be a non-automated object (which may, for example, be held by user and manually moved, or otherwise moved by another means), such as a box of goods or a crate of goods; in another embodiment the object may be an automated object (which may move automatically). In an embodiment the object is a robot such as a mobile robot; in the present disclosure a robot, or mobile robot, includes but is not limited to any device (preferably an automated device) that is operable to move. Examples of a mobile robot, include, but are not limited to, a vehicle (such as an aerial vehicle such as a drone for example; or a land-vehicle such a forklift or automobile for example); or a humanoid robot. In a preferred embodiment the mobile robot is an autonomous (i.e. an autonomous mobile robot). For example, in an embodiment the mobile robot is an autonomous aerial vehicle (such as an autonomous drone); in a preferred embodiment the mobile robot is an autonomous aerial vehicle, such as an autonomous drone, which is suitable for (and configured to) fly indoors (such as inside a warehouse).

The trajectory preferably comprises at least a plurality of physical locations which are within the predefined coordinate system; when the object moves (or is moved) along the trajectory the object will move to the physical locations which are specified in the trajectory.

In a preferred embodiment of the present invention the trajectory which the object or mobile robot is operated to move along is a predefined trajectory.

The trajectory may have locations located within the detection range of the one or more sensors and locations outside of the detection range of the one or more sensors; consequently, as the object follows the trajectory the object will cross over the boundary of the detection range one or more times (preferably at least three times); the time instances at which the object crosses over the boundary of the detection range are recorded. The physical location of the object at time instances corresponding to the time instances at which the object crossed over the boundary of the detection range can be used to determine the detection range of the one or more sensors. In the present disclosure it should be understood that the phrase 'moving along the trajectory' can also mean 'following the trajectory'.

Preferably the method of claim 1 for calibrating a detection range of one or more sensors that are within a predefined coordinate system, is a computer implemented method. According to a further aspect of the present invention there is provided a computer program which when executed by a processor will cause the processor to carry out, or initiate the carrying out of, the steps of the method for calibrating a detection range of one or more sensors that are within a predefined coordinate system. According to the further aspect of the present invention there is provided a computer-readable storage device, containing a set of instructions that causes a computer to carry out, or initiate the carrying out of, the steps of the method for calibrating a detection range of one or more sensors that are within a predefined coordinate system.

Advantageously, the method of the present invention can be fully automated; and can be performed without human intervention. Accordingly, the method of the present invention is less time consuming, requires less manpower, and is less susceptible to human error, compared to existing methods used in the field.

Furthermore, the method of the present invention uses an object to calibrate a detection range of one or more sensors. Any object of which the physical location can be determined can be used; but most preferably the object is a mobile robot. Preferably, the mobile robot is a mobile robot which is configured to perform one or more other primary functions besides its use in the calibration method. For example, preferably the mobile robot is an autonomous drone which is part of an inventory management system within a warehouse or other industrial setting, wherein the drone flies to monitor the level of inventory. In this case the autonomous drone is primarily used for inventory management, but conveniently may also be used to calibrate a detection range of one or more sensors according to the method of the present disclosure. Accordingly, a further advantage of the present invention is that it unlocks additional value from objects, mobile robots/ autonomous aerial vehicles (e.g. drones) that are already present in the warehouse or other industrial setting to perform other functions. Yet a further advantage it that the mobile robots/ autonomous drone can be automated to fly along the trajectory at predefined intervals (e.g. once per day, or once per month) so that the one or more sensors can be automatically regularly recalibrated.

According to a further aspect of the present invention there is provided method for testing an optical beam smoke detector, comprising the steps of, moving an object along a trajectory, wherein the trajectory intersects a smoke detection optical beam emitted by the smoke detector; detecting if smoke alarm of the optical beam smoke detector is triggered when the object intersects the smoke detection optical beam.

Preferably, the method for testing an optical beam smoke detector is a computer implemented method. According to a further aspect of the present invention there is provided a computer program which when executed by a processor will cause the processor to carry out, or initiate the carrying out of, the steps of the method for testing an optical beam smoke detector. According to the further aspect of the present invention there is provided a computer-readable storage device, containing a set of instructions that causes a computer to carry out, or initiate the carrying out of, the steps of the method for testing an optical beam smoke detector.

According to a further aspect of the present invention there is provided a method for testing a sensor which can measure distance, wherein the sensor is located at a predefined position within a predefined coordinate system, the method comprising the steps of, moving a object to a predefined location within the predefined coordinate system; using the sensor to measure the distance between the sensor and the object when the object is at said predefined location, so that the sensor outputs a distance measurement; determining the distance between the object and the sensor by determining the distance between said predefined location of the object within the predefined coordinate system and the predefined position of the sensor within the predefined coordinate system, to provide a determined distance; determining the difference between the determined distance with the distance measurement output from the sensor; determining that the sensor is functioning as it should if the determined difference is less than, or equal to, a predefined threshold difference.

According to a preferred embodiment there is provided a method for testing a sensor which can measure distance, wherein the sensor is located at a predefined position within a predefined coordinate system, comprises the steps of, moving the object along a trajectory within the predefined coordinate system; using the sensor to measure the distance between the sensor and the object as the object is moving along the trajectory, so that the sensor outputs a series of distance measurement, over time; determining the location of the object within the predefined coordinate system at at least a first time instant; and determining the distance between the location of the object at said at least first time instance and the sensor using the determined location of the object within the predefined coordinate system at said at least first time instant and the predefined position of the sensor within the predefined coordinate system, to provide a determined distance; determining the difference between the determined distance and the distance measurement output from the sensor at a time instant corresponding to said at least first time instant; and determining that the sensor is functioning as it should if the determined difference is less than, or equal to, a predefined threshold difference.

Preferably, the method for testing a sensor which can measure distance, is a computer implemented method. According to a further aspect of the present invention there is provided a computer program which when executed by a processor will cause the processor to carry out, or initiate the carrying out of, the steps of the method for testing a sensor which can measure distance. According to the further aspect of the present invention there is provided a computer-readable storage device, containing a set of instructions that causes a computer to carry out, or initiate the carrying out of, the steps of the method for testing a sensor which can measure distance.

It should be understood that only the features/steps recited in the respective independent claims are essential to the respective inventions. It should be understood that any of the subsequently described features/steps are optional features/steps of any of the embodiments described in the present disclosure. The dependent claims recite optional features/steps of various embodiments of the invention. It should also be understood that even if a step/feature is described in the present disclosure as being a step/feature of a particular embodiment, it should be understood that that feature/step could be an optional step/feature of any of the other embodiments of the present disclosure. Any embodiment disclosed in the present disclosure may have any one or more of the step/feature of any of the other embodiments disclosed in the present disclosure.

### Brief description of the drawings

Exemplary embodiments of the inventions are described with reference to the following drawings in which:
Figure 1 illustrates a method for calibrating a detection range of one or more sensors according to an embodiment of the present invention, being carried out;
Figures 2a and 2b illustrate a method for testing an optical beam smoke detector according to a further aspect of the present invention.

### Detailed description of embodiments of the invention

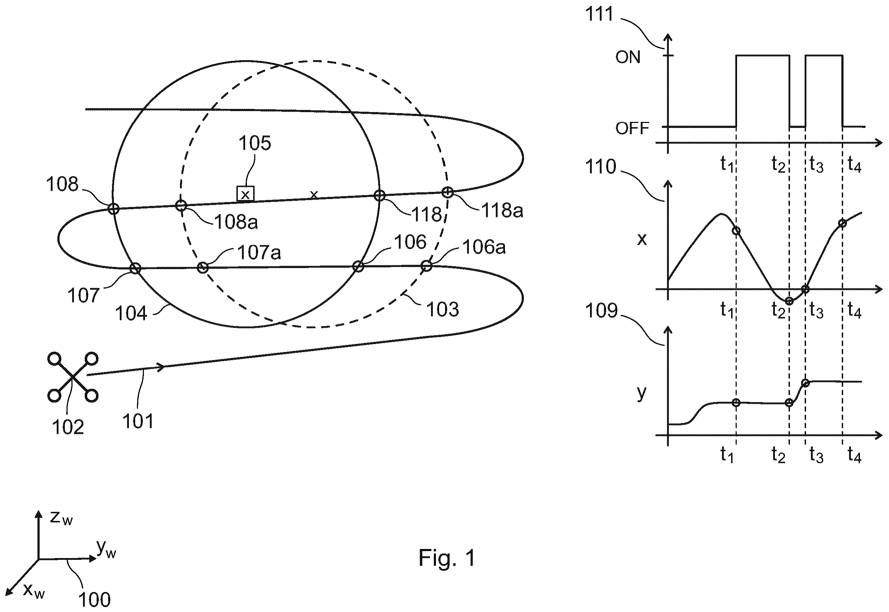

Figure 1 illustrates a method for calibrating a detection range of one or more sensors 105 according to an embodiment of the present invention, being carried out. In this example the one or more sensors 105 comprise a proximity sensor 105. However, it should be understood that the one or more sensors 105 may take any suitable form. For example, the one or more sensors 105 may comprise, one or more cameras, one or more motion detectors, and/or one or more presence detectors, and/or one or more optical beam smoke detectors and/or one or more proximity sensors. Motion detectors may detect moving subjects/objects; whereas presence detectors may detect when a subject/object is present in the detection range.

The one or more sensors 105 are located within a predefined coordinate system 100 (which in this example is a world coordinate system). As illustrated in Figure 1 the predefined coordinate system 100 is a three-dimensional coordinate system having an x, y and z axes.

The one or more sensors 105 have a predefined estimated detection range 103 illustrated by a dashed-line boundary 103. The one or more sensors 105 have a detection range 104 illustrated by a continuous-line boundary 104; the detection range 104 is unknown and an objective to the method is to determine the unknown detection range 104. In the example illustrated in Figure 1 the predefined estimated detection range 103 is different to the detection range 104 (e.g. the predefined estimated detection range 103 is in a different location within the predefined coordinate system 100 to the location of the of the detection range 104; also the shape and size of the predefined estimated detection range 103 is different to the shape and size of the detection range 104), meaning that the predefined estimated detection range 103 is not an accurate estimate of the detection range 104 of the one or more sensors 105.

The method comprises the steps of, (a) moving (or operating to move) an object 102, which in this exemplary embodiment shown in Figure 1 is in the form of a mobile robot 102, along a trajectory 101, wherein the trajectory 101 comprises at least a first physical location which is within a predefined estimate 103 of the detection range of the one or more sensors, and at least a second physical location which is outside of the predefined estimate of the detection range of the one or more sensors;
(b) determining the physical location of the mobile robot 102, over time, within the predefined coordinate system 100;
(c) operating the one or more sensors 105 to detect, wherein when the one or more sensors 105 are operated to detect they provide an output, and the output will indicate the presence of the mobile robot 102 if the mobile robot 102 is within the detection range 104 of the one or more sensors 105;
(d) identifying a time instant (t₂, t₄) at which the one or more sensors 105 no longer detect the mobile robot 102, and/or, identifying a time instant (t₁,t₃) at which the one or more sensors 105 begin to detect the mobile robot 102;
(e) determining the detection range 104 of the one or more sensors 105 using the physical location of the mobile robot 102 at a time instant (t₂, t₄) corresponding to the identified time instant (t₂, t₄) at which the one or more sensors no longer detect the mobile robot, and/or, determining the detection range 104 of the one or more sensors 105 using the physical location of the mobile robot 102 at a time instant (t₁, t₃) corresponding to the identified time instant (t₁, t₃) at which the one or more sensors begin to detect the mobile robot 102.

It should be understood that the mobile robot 102 may be any device (preferably an automated device) that is operable to move. Examples of a mobile robot, include, but are not limited to, a vehicle (such as an aerial vehicle such as a drone for example; or a land-vehicle such a forklift or automobile for example), or a humanoid robot. In a preferred embodiment the mobile robot 102 is an autonomous (i.e. an autonomous mobile robot). In the example illustrated in the Figures the mobile robot 102 is an autonomous aerial vehicle 102 (such as an autonomous drone); preferably the autonomous aerial vehicle 102 is suitable for (and is configured to) fly indoors (such as inside a warehouse). In the case the mobile robot 102 is an autonomous aerial vehicle 102 then movement of the mobile robot 102 along the trajectory 101 may involve flying the autonomous aerial vehicle 102 along the trajectory 101. The trajectory 101 may be stored in a memory as a flight plan for the autonomous aerial vehicle 102 follow (preferably, to autonomously follow) when operated.

Although the embodiment illustrated in the figures show the object 102 in the form of a mobile robot 102, it should be understood that the present invention is not limited to requiring the object 102 to be a mobile robot 102; rather the object 102 may take any suitable form: in an embodiment the object 102 may be a non-automated object (such as a box of goods, or a crate of goods) which may, for example, be held by user or otherwise held (e.g. by a forklift), and manually moved along the trajectory 101. In another embodiment, such as the embodiment illustrated in Figure 1, the object may be any automated object (which may move automatically along the trajectory 101), such as the mobile robot 102. In other words, the object may be a 'dumb' object which is not capable of self-propulsion and therefore must be actively moved along the trajectory 101, or, the object may be capable of self-propulsion and therefore operable to move along the trajectory 101.

Most preferably said aforementioned method for calibrating a detection range of the one or more sensors 105 that are within the predefined coordinate system 100, is a computer implemented method. According to a further aspect of the present invention there is provided a computer program which when executed by a processor will cause the processor to carry out, or initiate the carrying out of, the steps of the method for calibrating a detection range of the one or more sensors 105 that are within a predefined coordinate system 100. According to the further aspect of the present invention there is provided a computer-readable storage device, containing a set of instructions that causes a computer to carry out, or initiate the carrying out of, the steps of the method for calibrating a detection range of one or more sensors 105 that are within a predefined coordinate system 100.

In an embodiment the method comprises the steps of, identifying a time instant (t₂, t₄) at which the one or more sensors 105 transition from detecting the object 102 to no longer detecting the object 102; and determining the detection range 104 of the one or more sensors 105 using the physical location of the object 102 at a time instant (t₂, t₄) corresponding to the identified time instant (t₂, t₄) at which the one or more sensors 105 transition from detecting the object 102 to no longer detecting the object 102.

In an embodiment the method comprises the steps of, identifying a time instant (t₁, t₃) at which the one or more sensors 105 transition from not detecting the object 102 to detecting the object 102; and determining the detection range 104 of the one or more sensors 105 using the physical location of the object 102 at a time instant (t₁, t₃) corresponding to the identified time instant (t₁, t₃) at which the one or more sensors 105 transition from not detecting the object 102 to detecting the object 102.

In a preferred embodiment the trajectory 101 comprises a plurality of physical locations each of which are within the predefined estimate 103 of the detection range of the one or more sensors 105, and a plurality of physical locations each of which are outside of the predefined estimate 103 of the detection range of the one or more sensors 105; and wherein said plurality of physical locations inside the predefined estimate 103 of the detection range and said plurality of physical locations outside of the predefined estimate 103 of the detection range are distributed so that when the object 102 moves along the trajectory 101 the mobile robot 102 will cross a boundary 103 of the predefined estimate 103 of the detection range a plurality of times. In an embodiment the trajectory 101 may be a predefined trajectory. As illustrated in Figure 1 the trajectory 101 is a meandering trajectory: the trajectory 101 illustrated in Figure 1 causes the object 102 to cross from a physical location which is outside the predefined estimate 103 of the detection range of the one or more sensors 105 to a location which is inside the predefined estimate 103 of the detection range of the one or more sensors 105 at a first point 106a on the boundary of the predefined estimate 103 of the detection range; the trajectory 101 causes the object 102 to cross from a physical location which is inside the predefined estimate 103 of the detection range of the one or more sensors 105 to a location which is outside the predefined estimate 103 of the detection range of the one or more sensors 105 at a second point 107a on boundary of the predefined estimate 103 of the detection range; the trajectory 101 causes the object to cross from a physical location which is outside the predefined estimate 103 of the detection range of the one or more sensors 105 to a location which is inside the predefined estimate 103 of the detection range of the one or more sensors 105 at a third point 108a on the boundary of the predefined estimate 103 of the detection range; and the trajectory 101 causes the object 102 to cross from a physical location which is inside the predefined estimate 103 of the detection range of the one or more sensors 105 to a location which is outside the predefined estimate 103 of the detection range of the one or more sensors 105 at a fourth point 118a on boundary of the predefined estimate 103 of the detection range. The trajectory 101 is such that the object 102 will cross the boundary of the predefined estimate 103 of the detection range a plurality of times, meaning that when the object 102 moves along the trajectory 103 the object 102 will enter into the predefined estimate 103 of the detection range of the one or more sensors 105 and exit the predefined estimate 103 of the detection range of the one or more sensors 103, a plurality of times, at different locations 106a,107a,108a, 118a, within the predefined coordinate system 101.

Providing a trajectory 101 which causes the object 102 to cross the boundary of the predefined estimate 103 of the detection range at a plurality of point on the boundary of the predefined estimate 103 of the detection range ensures (or at least increases the chances) that the object 102 will cross the boundary of the detection range 104 of the one or more sensors 105 by following said trajectory 101.

As illustrated in Figure 1 by following the trajectory 101 the object will cross, at a first time instant (t₁), from a physical location which is outside the detection range 104 of the one or more sensors 105 to a location which is inside the detection range 104 of the one or more sensors 105 at a first point 106 on a boundary of the detection range 104; the trajectory 101 causes the object to cross, at a second time instant (t₂), from a physical location which is inside the detection range 104 of the one or more sensors 105 to a location which is outside the detection range 104 of the one or more sensors 105 at a second point 107 on a boundary of the detection range 104; and the trajectory 101 causes the object to cross, at a third time instant (t₃), from a physical location which is outside the detection range 104 of the one or more sensors 105 to a location which is inside the detection range 104 of the one or more sensors 105 at a third point 108 on a boundary of the detection range 104; the trajectory 101 causes the object to cross, at a fourth time instant (t₄), from a physical location which is inside the detection range 104 of the one or more sensors 105 to a location which is outside the detection range 104 of the one or more sensors 105 at a fourth point 118 on a boundary of the detection range 104.

In the present example, the object 102 crosses the boundary of the detection range 104 of the one or more sensors 105 at least three times. This information may be used to refine the estimated detection range 103. This may be achieved for example by solving a least-squares problem.

It should be understood that it is not essential for the object to cross the boundary of the detection range 104 at four points 106,107, 108, 118. Most preferably the object will cross the boundary of the detection range 104 at at least three points (i.e. three locations) as certain 3-dimensional detection range of a sensor can be determined from three points on the boundary of the detection range (e.g. a spherical detection range). In other embodiments the object will only need to cross the boundary of the detection range 104 at only two points on the boundary of the detection range; for example, in the case that a circular 2-dimensional detection range of a sensor is to be determined. In other embodiments the object will only need to cross the boundary of the detection range 104 at only one single point on the boundary of the detection range; for example, in the case that a linear 1-dimensional detection range of a sensor is to be determined.

In an embodiment a shape of the boundary of the detection range of the one or more sensors may be a priori known/predefined; and the method may comprises determining, based on said a priori known/predefined shape of the boundary of the detection range, a minimum required number of points where the object will need to cross said boundary of said detection range in order to determine the detection range of the one or more sensors. The method may comprise determining a trajectory for the object to follow which will cross said boundary of said detection range at at least said determined required number of points. In another embodiment the shape of the boundary of the detection range of the one or more sensors may not be known a priori; and the method may comprises determining the detection range of the one or more sensors by fitting an estimation of a shape of the boundary of the detection range to points where the object has crossed the boundary of the detection range. In another embodiment where the shape of the detection range is not known a priori, the method may comprise determining the detection range of the one or more sensors by fitting a polygonal mesh (preferably the largest polygonal mesh) that fits within the points where the object has crossed the boundary of the detection range using a sampling-based approach.

As is the case in the example illustrated in Figure 1, the method comprises identifying a plurality of time instants (t₂, t₄) at which the one or more sensors 105 transition from detecting the object 102 to no longer detecting the object 102, and/or, identifying a plurality of time instants (t₁, t₃) at which the one or more sensors 105 transition from not detecting the object 102 to detecting the object 102. For each respective identified time instance (t₁, t₂, t₄, t₃), determining the detection range 104 of the one or more sensors 105 using respective physical locations of the object 105 at a plurality of time instants (t₁, t₂, t₄, t₃) corresponding to the identified plurality of time instants (t₁, t₂, t₄, t₃). The detection range 104 may be determined from the distances between the one or more sensors 105 and each of the respective physical locations the object 102 occupied at the respective time instants (t₁, t₂, t₄, t₃) corresponding to said identified time instants (t₁, t₂, t₄, t₃) (or directly from the position vectors of each of said respective physical locations). For example, if the object 102 is within the detection range 104 of the one or more sensors 105 then the one or more sensors 105 will detect the object 102; the time instant (t₂, t₄) at which the one or more sensors transition from detecting the object to no longer detecting the object, will be the time instant (t₂, t₄) at which the object 102 has reached the boundary of the detection range 104 of the one or more sensors 105. The physical location of the object 102 at the time instant (t₂, t₄) corresponding to said time instant (t₂, t₄) at which the one or more sensors 105 transition from detecting the object 102 to no longer detecting the object 102, will indicate the physical location of the boundary of the detection range 104. Accordingly, in an embodiment, the distance from the one or more sensors 105 to the physical location of the object 102 at the time instant (t₂, t₄) corresponding to said time instant (t₂, t₄) at which the one or more sensors 105 transition from detecting the object 102 to no longer detecting the object 102, will define the detection range of the one or more sensors.

Likewise, if, for example the object 102 is outside of the detection range 104 of the one or more sensors 105 then the one or more sensors 105 will not detect the object 102; the time instant (t₁, t₃) at which the one or more sensors 105 transition from not detecting the object 102 to detecting the object 105, will be the time instant (t₁, t₃) at which the object 105 has reached the boundary of the detection range 104 of the one or more sensors 105. The physical location of the object 102 at the time instant (t₁, t₃) corresponding to said time instant (t₁, t₃) at which the one or more sensors 105 transition from not detecting the object 102 to detecting the object 102, will indicate the physical location of the boundary of the detection range 104. Accordingly, in an embodiment, the distance from the one or more sensors 105 to the physical location of the object 102 at the time instant (t₁, t₃) corresponding to said time instant (t₁, t₃) at which the one or more sensors 105 transition from not detecting the object 102 to detecting the object 102, will define the detection range of the one or more sensors 105.

In the case the trajectory 101 is configured so the object 102 is likely to cross a boundary of the detection range 104 a plurality of times at a plurality of different locations within the predefined coordinate system - as is the case in the example illustrated in Figure 1 - then will be a plurality time instants (t₁, t₃) at which the one or more sensors 105 transition from not detecting the object 102 to detecting the object 102 and a plurality of time instants (t₂, t₄) at which the one or more sensors 105 transition from detecting the object 102 to no longer detecting the object 102. The respective physical locations of the object 102 at each of the respective time instants (t₁, t₂, t₃, t₄) will indicate respective physical locations that lie on the boundary of the detection range 104; because there is a plurality of different time instances (t₁, t₂, t₃, t₄) there will be corresponding a plurality of physical locations that lie on the boundary of the detection range 104. Having a plurality of physical locations that lie on the boundary of the detection range 104 will facilitate a more precise determination of the detection range 104 of the one or more sensors 105 (e.g. one can determine the detection range to a higher resolution and/or accuracy).

In an embodiment the predefined estimate 103 of the detection range is equal to a detection range 104 of the one or more sensors 105 that was determined in a previous iteration of the method. In other words, a detection range 104 of the one or more sensors 105, that was determined in a previous iteration of the method, defines the predefined estimate 103 of the detection range. This may be beneficial to choose a more optimal trajectory such that the object 102 will be more likely to cross (or more often cross) the boundary of the detection range 104 of the one or more sensors 105.

In an embodiment the trajectory 101 is defined by a trajectory which the object 102 follows when carrying out a predefined task. The predefined task comprises at least one or, carrying out inventory management, and/or moving items and/or delivering items.

It should be understood that the object 102 may take any suitable form. In an embodiment the object 102 is a mobile robot. In an embodiment the object 102 is an autonomous robot. In an embodiment the mobile robot 102 is an autonomous aerial vehicle. In a preferred embodiment the mobile robot 102 is an autonomous aerial vehicle which is part of an inventory management system, wherein the autonomous aerial vehicle is configured to monitor the level of inventory (preferably, within a predefined space, such as a warehouse) and the trajectory 101 is defined by a trajectory which the autonomous aerial vehicle follows when monitoring the level of inventory. In this case the autonomous aerial vehicle is primarily used for inventory management, but conveniently may also be used for a secondary purpose of calibrating a detection range of one or more sensors 105 (e.g. one or more sensors which are located in the warehouse which stored the inventory). Moreover, the mobile robot can be automated to fly along the trajectory 101 at predefined intervals (e.g. once per day, or once per month) so that the detection range of one or more sensors 105 can be automatically regularly recalibrated.

The step (b) of determining the physical location of the object 102, over time, within the predefined coordinate system 100 may be performed using any suitable means.

Figure 1 illustrates a first graph 109 which plots the position of the object 102 along the y-axis of the predefined coordinate system 100, as the object 102 moves along the trajectory 101 over time. Figure 1 illustrates a second graph 110 which plots the position of the object 102 along the x-axis of the predefined coordinate system 100, as the object 102 moves along the trajectory 101 over time. In an embodiment a further graph may be provided which plots the position of the object 102 along the z-axis of the predefined coordinate system 100, as the Object 102 moves along the trajectory 101. In an embodiment object 102 has a constant, predefined, position along the z-axis of the predefined coordinate system 100, as the object 102 moves along the trajectory 101 (in other words the trajectory has a predefined contact z-axis component).

In the example illustrated in Figure 1 the one or more sensors have a 2-dimensional detection range 104; more specifically, in the example illustrated in Figure 1 the one or more sensors have a the 2-dimensional circular detection range 104. Since, in this example the one or more sensors have a 2-dimensional detection range 104, only a first graph 109 which plots the position of the object 102 along the y-axis of the predefined coordinate system 100, and a second graph 110 which plots the position of the object 102 along the x-axis of the predefined coordinate system 100, is illustrated in Figure 1. It should be noted that in the case the one or more sensors 105 would have a 3-dimensional detection range 104, then preferably a further graph which plots the position of the object 102 along the z-axis of the predefined coordinate system 100, as the object 102 moves along the trajectory 101, is provided.

In an embodiment the step (b) of determining the physical location of the object 102 within the predefined coordinate system 100, over time, comprises using a first clock and a position determining means to determine the physical location of the object 102 at any time instant. Preferably the step of determining the physical location of the object, within the predefined coordinate system 100, over time, comprises using the first clock and a position determining means to determine the physical location of the object 102 at any time instant during the time period that the object is moving along the trajectory 101. The position of the object 102 along the y-axis of the predefined coordinate system 100, illustrated in the first graph 109 was determined by the position determining means, and the time component of that first graph 109 was measured by the first clock. Likewise, the position of the object 102 along the x-axis of the predefined coordinate system 100, illustrated in the second graph 110 was determined by the position determining means, and the time component of that second graph 110 was measured by the first clock. In this exemplary embodiment, the first graph 109 and second graph 110 were an output of the position determining means.

Importantly, the position of the object 102 along the y-axis of the predefined coordinate system 100, at the first time instant (t₁), is indicated on the first graph 109; the position of the object 102 along the y-axis of the predefined coordinate system 100, at the second time instant (t₂), is indicated on the first graph 109; the position of the object 102 along the y-axis of the predefined coordinate system 100, at the third time instant (t₃), is indicated on the first graph 109; and the position of the object 102 along the y-axis of the predefined coordinate system 100, at the fourth time instant (t₄), is indicated on the first graph 109. Likewise, the position of the object 102 along the x-axis of the predefined coordinate system 100, at the first time instant (t₁), is indicated on the second graph 110; the position of the object 102 along the x-axis of the predefined coordinate system 100, at the second time instant (t₂), is indicated on the second graph 110; the position of the object 102 along the x-axis of the predefined coordinate system 100, at the third time instant (t₃), is indicated on the second graph 110; and the position of the object 102 along the x-axis of the predefined coordinate system 100, at the fourth time instant (t₄), is indicated on the second graph 110.

In an embodiment, the positioning determining means may determine the physical location of the object 102 within the predefined coordinate system 100, preferably at predefined intervals, and preferably as the object 102 is moving along the trajectory 101; the time at which each respective physical location is recorded by the first clock. This creates a history of the past physical locations occupied by the object 102 (preferably the past physical locations occupied by the object 102 as the object is moved along the trajectory 101) and the time at which the object occupied each respective past physical location.

In a further embodiment the trajectory 101 comprises one or more positions in the predefined coordinate system 100 for the object 102 to move to, and one or more velocities at which the object 102 should move; and the step (b) of determining the physical location of the object 102 within the predefined coordinate system 100, over time, comprises, using a first clock, and a known start time at which the object 102 begins the trajectory 101, and the trajectory 101, to determine the physical location of the object 102 in the predefined coordinate system 100 at any time instant during the time period that the object is moving along the trajectory 101. For example, if it is known that the object 102 will begin to move along the trajectory 101 at "2 o'clock" (time on the first clock), and it is known from the trajectory 101 each physical location of the object 102 within the predefined coordinate system 100 (from a starting physical location, and all subsequent physical locations, to an end physical location), and the velocity at which the object 102 will move to each physical location, then the physical location of the object within the predefined coordinate system, at any time, can be determined. Thus the first graph 109 and second graph 110 shown in Figure 1 could alternatively have been derived, from time measured by a first clock, and a known start time at which the object 102 begins the trajectory 101, and the trajectory 101 which comprises one or more positions in the predefined coordinate system 100 for the object 102 to move to, and one or more velocities at which the object 102 should move. Preferably the trajectory 101 comprises a series of physical locations in the predefined coordinate system 100 for the object 102 to move to, and one or more velocities at which the object 102 should move at each physical location in the series. In the present disclosure a known start time may be a predefined start time.

In an embodiment a second clock is used to record the time of each detection done by the one or more sensors 105 (the output of the one or more sensors 105 may thus have a time component indicating the time instant of the detection that gave rise to that respective output). The first clock and second clock are preferably synchronized to have the same time. In another embodiment the first clock and second clock are synchronized to have a fixed predefined (known) time difference. In an embodiment the method may further comprise the step of slowing the velocity at which the object 102 moves along the trajectory 101 if there is an undeterminable and/or drifting difference between the time on the first clock and the time on the second clock. In an embodiment the first clock and second clock are different clocks (i.e. two clocks are used). In another embodiment the first clock and second clock are the same clock so that only one single clock is used.

Figure 1 also illustrates a third graph 111 which is the output of the one or more sensor 105. At the first time instant (t₁), the sensor output transitions from 'off' to 'on' (i.e. transitions from not detecting the object 102 to detecting the object 102) as the object 102 moves a from a physical location which is outside the detection range 104 of the one or more sensors 105 to a physical location which is inside the detection range 104 of the one or more sensors 105 at a first point 106 on a boundary of the detection range 104. The physical location of the first point 106 within the predefined coordinate system 100 corresponds to the position of the object 102 within the predefined coordinate system 100 at the first time instant (t₁). Accordingly, the physical location of the first point 106 within the predefined coordinate system 100 can be determined by determining the position of the object 102 within the predefined coordinate system 100 at the first time instant (t₁). The 'x-axis' and 'y-axis' position of the object 102 within the predefined coordinate system 100 at the first time instant (t₁) can be read from the first graph 109 and second graph 110 respectively. Thus, the physical location (in this example, 2-dimensional coordinates along the x and y axis of the predefined coordinate system 100) of the first point 106 within the predefined coordinate system 100 is determined.

In the example illustrated in Figure 1 the one or more sensors have a 2-dimensional detection range 104 (more specifically a 2-dimensional circular detection range 104), hence the z-axis coordinate of the physical location of the first point 106 within the predefined coordinate system 100 is not required to be able to determine the detection range 104 of the one or more sensors 105. In an embodiment the z-axis coordinate of the physical location of the first point 106 within the predefined coordinate system 100, may be a predefined constant; for example, the z-axis coordinate of the physical location of the first point 106 within the predefined coordinate system 100, may be equal to a z-coordinate of the fixed physical location of the one or more sensors within the predefined coordinate system 100. In another example the trajectory 101 will cause the object to move at a fixed constant height, and z-axis coordinate of the physical location of the first point 106 will correspond to said fixed constant height.

At second time instant (t₂) the sensor output transitions from 'on' to 'off' (i.e. transitions from detecting the object 102 to not detecting the object 102) as the object 102 moves from a physical location which is inside the detection range 104 of the one or more sensors 105 to a physical location which is outside the detection range 104 of the one or more sensors 105 at a second point 107 on a boundary of the detection range 104. The physical location of the second point 107 within the predefined coordinate system 100 corresponds to the position of the object 102 within the predefined coordinate system 100 at the second time instant (t₂). Thus, the physical location of the second point 107 within the predefined coordinate system 100 can be determined by determining the position of the object 102 within the predefined coordinate system 100 at the second time instant (t₂). The position of the object 102 within the predefined coordinate system 100 at the second time instant (t₂) can be read from the first graph 109 and second graph 110 (in this example the first graph 109 and second graph 110 which in this example were output by a position determining means). The 'x-axis' and 'y-axis' position of the object 102 within the predefined coordinate system 100 at the second time instant (t₂) can be read from the first graph 109 and second graph 110 respectively. Thus, the physical location (in this example, 2-dimensional coordinates along the x and y axis of the predefined coordinate system 100) of the second point 107 within the predefined coordinate system 100 is determined.

In the example illustrated in Figure 1 the one or more sensors have a 2-dimensional detection range 104 (more specifically a 2-dimensional circular detection range 104), hence the z-axis coordinate of the physical location of the second point 107 within the predefined coordinate system 100 is not required to be able to determine the detection range 104 of the one or more sensors 105. In an embodiment the z-axis coordinate of the physical location of the second point 107 within the predefined coordinate system 100, may be a predefined constant; for example, the z-axis coordinate of the physical location of the second point 107 within the predefined coordinate system 100, may be equal to a z-coordinate of the fixed physical location of the one or more sensors within the predefined coordinate system 100. In another example the trajectory 101 will cause the object to move at a fixed constant height, and z-axis coordinate of the physical location of the second point 107 will correspond to said fixed constant height.

At a third time instant (t₃) the sensor output transitions from 'off' to 'on' (i.e. transitions from not detecting the object 102 to detecting the object 102) as the object 102 moves a from a physical location which is outside the detection range 104 of the one or more sensors 105 to a physical location which is inside the detection range 104 of the one or more sensors 105 at a third point 108 on a boundary of the detection range 104. The physical location of the third point 108 within the predefined coordinate system 100 corresponds to the position of the object 102 within the predefined coordinate system 100 at the third time instant (t₃). Thus, the physical location of the third point 108 within the predefined coordinate system 100 can be determined by determining the position of the object 102 within the predefined coordinate system 100 at the third time instant (t₃). The position of the object 102 within the predefined coordinate system 100 at the third time instant (t₃) can be read from the first graph 109 and second graph 110 (in this example the first graph 109 and second graph 110 which in this example were output by a position determining means). The 'x-axis' and 'y-axis' position of the object 102 within the predefined coordinate system 100 at the third time instant (t₃) can be read from the first graph 109 and second graph 110 respectively. Thus, the physical location (in this example, 2-dimensional coordinates along the x and y axis of the predefined coordinate system 100) of the third point 108 within the predefined coordinate system 100 is determined.

In the example illustrated in Figure 1 the one or more sensors have a 2-dimensional detection range 104 (more specifically a 2-dimensional circular detection range 104), hence the z-axis coordinate of the physical location of the third point 108 within the predefined coordinate system 100 is not required to be able to determine the detection range 104 of the one or more sensors 105. In an embodiment the z-axis coordinate of the physical location of the third point 108 within the predefined coordinate system 100, may be a predefined constant; for example, the z-axis coordinate of the physical location of the third point 108 within the predefined coordinate system 100, may be equal to a z-coordinate of the fixed physical location of the one or more sensors within the predefined coordinate system 100. In another example the trajectory 101 will cause the object to move at a fixed constant height, and z-axis coordinate of the physical location of the third point 108 will correspond to said fixed constant height.

At fourth time instant (t₄) the sensor output transitions from 'on' to 'off' (i.e. transitions from detecting the object 102 to not detecting the object 102) as the object 102 moves from a physical location which is inside the detection range 104 of the one or more sensors 105 to a physical location which is outside the detection range 104 of the one or more sensors 105 at a fourth point 118 on a boundary of the detection range 104. The physical location of the fourth point 118 within the predefined coordinate system 100 corresponds to the position of the object 102 within the predefined coordinate system 100 at the fourth time instant (t₄). Thus, the physical location of the fourth point 118 within the predefined coordinate system 100 can be determined by determining the position of the object 102 within the predefined coordinate system 100 at the fourth time instant (t₄). The position of the object 102 within the predefined coordinate system 100 at the fourth time instant (t₄) can be read from the first graph 109 and second graph 110 (in this example the first graph 109 and second graph 110 which in this example were output by a position determining means). The 'x-axis' and 'y-axis' position of the object 102 within the predefined coordinate system 100 at the fourth time instant (t₄) can be read from the first graph 109 and second graph 110 respectively. Thus, the physical location (in this example, 2-dimensional coordinates along the x and y axis of the predefined coordinate system 100) of the fourth point 118 within the predefined coordinate system 100 is determined.

In the example illustrated in Figure 1 the one or more sensors have a 2-dimensional detection range 104 (more specifically a 2-dimensional circular detection range 104), hence the z-axis coordinate of the physical location of the fourth point 118 within the predefined coordinate system 100 is not required to be able to determine the detection range 104 of the one or more sensors 105. In an embodiment the z-axis coordinate of the physical location of the fourth point 118 within the predefined coordinate system 100, may be a predefined constant; for example, the z-axis coordinate of the physical location of the fourth point 118 within the predefined coordinate system 100, may be equal to a z-coordinate of the fixed physical location of the one or more sensors within the predefined coordinate system 100. In another example the trajectory 101 will cause the object to move at a fixed constant height, and z-axis coordinate of the physical location of the fourth point 118 will correspond to said fixed constant height.

It should be noted that the physical location of the fourth point 118 within the predefined coordinate system 100 is not needed to determine the detection range of the sensor. Rather, in an embodiment, only the physical locations of the three points 106,107,108 within the predefined coordinate system 100 is needed to be able to determine a certain 3-dimensional range of a sensor (e.g. a spherical detection range). In other words, in an embodiment, the object 102 only needs to cross the boundary of the detection range 104 at three locations to be able to determine a certain 3-dimensional range of a sensor. In another embodiment the physical locations only two points 106,107 within the predefined coordinate system 100 are needed; for example, in an embodiment, the object 102 only needs to cross the boundary of the detection range 104 at two locations to be able to determine a certain 2-dimensional range of a sensor (e.g. a circular detection range). In another embodiment the physical location only one single point 106 within the predefined coordinate system 100 is needed; for example, in an embodiment, the object 102 only needs to cross the boundary of the detection range 104 at a single location to be able to determine a linear 1-dimensional range of a sensor.

In an embodiment a shape of the boundary of the detection range of the one or more sensors may be a priori known/predefined; and the method may comprises determining, based on said a priori known/predefined shape of the boundary of the detection range, a minimum required number of points where the object will need to cross said boundary of said detection range in order to determine the detection range of the one or more sensors. The method may comprise determining a trajectory for the object to follow which will cross said boundary of said detection range at at least said determined required number of points. In another embodiment the shape of the boundary of the detection range of the one or more sensors may not be known a priori; and the method may comprises determining the detection range of the one or more sensors by fitting an estimation of a shape of the boundary of the detection range to points where the object has crossed the boundary of the detection range. In another embodiment where the shape of the detection range is not known a priori, the method may comprise determining the detection range of the one or more sensors by fitting a polygonal mesh (preferably the largest polygonal mesh) that fits within the points where the object has crossed the boundary of the detection range using a sampling-based approach.

Accordingly at this stage in the method the physical locations of the first point 106, second point 107, third point 108, and fourth point 118 within the predefined coordinate system 100 have been determined. Next the physical locations of the first point 106, second point 107, third point 108 (and optionally also the physical location of the fourth point 118), all of which lie on the boundary of the detection range 104 of the one or more sensor 105, are used to determine the detection range 104 of the one or more sensors 105. In the example illustrate in Figure 1, center coordinates (x,y) and a radius of the 2-dimensional circular detection range 104 of the one or more sensors is determined by fitting a circle to the physical locations of the first point 106, second point 107, third point 108. The circle that fits to the physical locations of the first point 106, second point 107, third point 108 defines the 2-dimensional circular detection range 104 of the one or more sensors 105.

In an embodiment the one or more sensors 105 are located in a predefined location within the predefined coordinate system 100.

In another embodiment the shape of the detection range 104 of the one or more sensor 105 is a predefined shape (known predefined shape), and the method further comprises the step of, determining the location of the one or more sensors 105 within the predefined coordinate system 100 using the predefined shape of the detection range 104 and an output of the one or more sensors 105. It should be understood that the detection range 104 may have any suitable predefined shape. The predefined shape may be a two-dimensional shape or a three-dimensional shape. For example, the predefined shape may be, circular, spherical, square, cube, cuboid, cylindrical, triangular, pyramidal, conical, frustoconical. For example, the detection range 104 may have a spherical shape (the spherical shape is the predefined shape); the shape of the detection range is known, but the dimensions of the detection range 104 may be unknown - in other words the center and radius/size of the spherical shaped detection range may be unknown. At least a first, second and third different physical locations 106,107,108 each of which lie on the boundary of the detection range 104, may be determined, by performing the steps of any of the above-mentioned method embodiments, to provide at least three points 106,107,108 that lie on the boundary of the detection range 104. The dimensions (i.e. the center and radius/size) of the spherical shape of the detection range can be determined using these first, second and third different physical locations 106,107,108 which lie on the boundary of the detection range 104. Once the dimensions (i.e. the center and radius/size) of the spherical shape of the detection range has been determined, the center of the spherical shape of the detection range 104 can be determined. The center of the spherical shape corresponds to the location of the one or more sensors 105.

In the above example the first physical location which lies on the boundary of the detection range, corresponds to a first physical location of the object at a time instant corresponding a first time instant at which the one or more sensors transition from detecting the object to no longer detecting the object, or transition from not detecting the object to detecting the object; the second physical location which lies on the boundary of the detection range, corresponds to a second physical location of the object at a time instant corresponding a second time instant at which the one or more sensors transition from detecting the object to no longer detecting the object, or transition from not detecting the object to detecting the object; the third physical location which lies on the boundary of the detection range, corresponds to a third physical location of the object at a time instant corresponding a third time instant at which the one or more sensors transition from detecting the object to no longer detecting the object, or transition from not detecting the object to detecting the object.

In an embodiment the method may further comprise the step of modifying the predefined estimate 103 of the detection range to be equal to the determined detection range 104 of the one or more sensors 105. In this case the detection range 104 of the one or more sensors 105 that was determined in an iteration of the method, will define the predefined estimate 103 of the detection range in a subsequent iteration of the method.

In an embodiment the method may further comprise the step of comparing the determined detection range 104 with a predefined target detection range to determine if the predefined target detection range is fully contained within the determined detection range 104 of the one or more sensors 105. For example, a certain detection range may be required for a particular application; that certain detection range will define a predefined target detection range. If the predefined target detection range is fully contained within the determined detection range 104 of the one or more sensors 105, then it may be determined that the range of the one or more sensors is sufficient for said application. If the predefined target detection range is not fully contained within the determined detection range 104 of the one or more sensors 105, then it may be determined that the detection range 104 of the one or more sensors 105 is insufficient for said application.

In an embodiment the method may further comprise the step of comparing the determined detection range 104 to a predefined threshold range. For example, a certain detection range may be required for a particular application; that certain detection range will define a predefined threshold range. If the determined detection range 104 of the one or more sensors 105 is equal to, or larger than, the predefined threshold range then it can be determined that the one or more sensors 105 are sufficient for said application. If the determined detection range 104 of the one or more sensors 105 is less than the predefined threshold range then it can be determined that the one or more sensors 105 are insufficient for said application. In an embodiment the predefined threshold range may represent a minimum detection range for the one or more sensors 105; if the determined detection range 104 of the one or more sensors 105 is below the predefined threshold range, then the one or more sensors are considered to be faulty or insufficient. In an embodiment the method further comprises determining that the one or more sensors 105 are insufficient or faulty, if the determined detection range 104 is less than the predefined threshold range; and/or determining that one or more sensors 105 are sufficient or without fault, if the determined detection range 104 is greater than the predefined threshold.

The steps of any embodiment of the method for calibrating a detection range of one or more sensors 105 (e.g. the steps (a)-(e)) may be repeated one or more times so that the one or more sensors 105 are calibrated one or more times. Preferably the steps of any embodiment of the method for calibrating a detection range of one or more sensors 105 (e.g. the steps (a)-(e)) are repeated at predefined time intervals (e.g. hourly, daily, weekly, monthly) so that the one or more sensors 105 are calibrated at predefined intervals; this will ensure that the one or more sensors 105 are calibrated/recalibrated regularly.

According to a further aspect of the present invention there is provided a method for testing an optical beam smoke detector, comprising the steps of,
(a1) moving an object along a trajectory, wherein the trajectory intersects a smoke detection optical beam emitted by the smoke detector;
(b1) detecting if a smoke alarm of the optical beam smoke detector is triggered when the object intersects the smoke detection optical beam.

It should be understood that object may take any suitable form. In an embodiment the object may be a non-automated object (such as a box of goods, or a crate of goods) which may, for example, be held by user or otherwise held (e.g. by a forklift), and manually moved along the trajectory. In another embodiment, the object may be any automated object (which may move automatically along the trajectory), such as the mobile robot. In other words, the object may be a 'dumb' object which is not capable of self-propulsion and therefore must be actively moved along the trajectory, or, the object may be capable of self-propulsion and therefore operable to move along the trajectory.

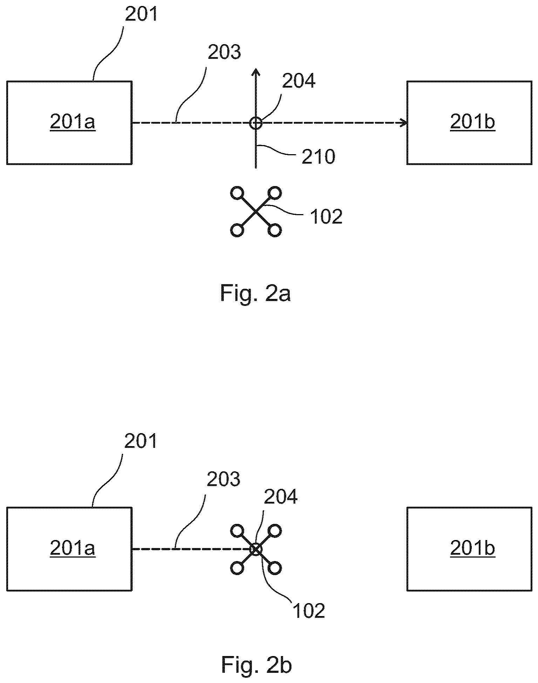

Figures 2a and 2b illustrate a method for testing an optical beam smoke detector 201 according to an exemplary embodiment of the present invention. The optical beam smoke detector 201 comprises an emitter 201a which is operable to emit a smoke detection optical beam 203; and a receiver 201b, which is configured to receive the smoke detection optical beam 203 emitted by the emitter 201a. In the event of a fire, smoke from the fire will block the path of the smoke detection optical beam 203 so that the smoke detection optical beam 203 emitted by the emitter 201a is not received at the receiver 201b; in response to not receiving the smoke detection optical beam 203 the optical beam smoke detector 201 will generate an alarm.

In another embodiment (not illustrated in Figures 2a and 2b), both the detector and emitter are located close to each other, and the light beam travels from the emitter, is reflected from a separate (i.e. physically separated) reflective surface such as a mirror or retroreflective sheeting and returns back to the detector. The method disclosed herein may analogously be applied to such emitter-reflector-detector setups.

As illustrated in Figures 2a the object 102, which in this exemplary embodiment is in the form of a mobile robot 102, is moved along a trajectory 210, wherein the trajectory 210 intersects the smoke detection optical beam 203 emitted by the emitter 201a of the smoke detector 201 at a point 204. It should be understood that a mobile robot may be any device (preferably an automated device) that is operable to move. Examples of a mobile robot, include, but are not limited to, a vehicle (such as an aerial vehicle such as a drone for example; or a land-vehicle such a forklift or automobile for example), or a humanoid robot. In a preferred embodiment the mobile robot is an autonomous (i.e. an autonomous mobile robot). Although the embodiment illustrated in figures 2a and 2b, show the object 102 in the form of a mobile robot 102, it should be understood that in the present invention is not limited to requiring the object 102 to be a mobile robot 102; rather the object 102 may take any suitable form: in an embodiment the object 102 may be a non-automated object (such as a box of goods, or a crate of goods) which may, for example, be held by user or otherwise held (e.g. by a forklift), and manually moved along the trajectory 210. In another embodiment, such as the embodiment illustrated in Figures 2a and 2b, the object may be any automated object (which may move automatically along the trajectory 210), such as the mobile robot 210. In other words, the object may be a 'dumb' object which is not capable of self-propulsion and therefore must be actively moved along the trajectory 210, or, the object may be capable of self-propulsion and therefore operable to move along the trajectory 210.

Figure 2b shows as the object 102 moves along a trajectory 210, the object 102 will intersect the smoke detection optical beam 203 emitted by the emitter 201a of the smoke detector 201 at a point 204, thereby blocking the path of the smoke detection optical beam 203 so that the smoke detection optical beam 203 emitted by the emitter 201a is not received at the receiver 201b. At this point the method involves detecting if a smoke alarm of the optical beam smoke detector 201 is triggered when the object intersects the smoke detection optical beam 203. If the smoke alarm of the optical beam smoke detector 201 is triggered then it can be concluded that the optical beam smoke detector 201 is functioning as it should and thus should safely trigger an alarm in the event of a fire; if the smoke alarm of the optical beam smoke detector 201 is not triggered then it can be concluded that the optical beam smoke detector 201 is not functioning as it should and thus cannot be relied on to safely trigger an alarm in the event of a fire.

The method for testing an optical beam smoke detector (i.e. the steps (a1) and(b1)) may be repeated at predefined intervals to regularly test the optical beam smoke detector.

In an embodiment of the method for testing an optical beam smoke detector, the object 102 is a mobile robot 102. In the exemplary embodiment shown Figure 2a the mobile robot 102 is in the form of an autonomous aerial vehicle 102 (such as an autonomous drone); preferably the autonomous aerial vehicle is suitable for (and is configured to) fly indoors (such as inside a warehouse). In a preferred embodiment the object 102 is an autonomous aerial vehicle which is part of an inventory management system, wherein the autonomous aerial vehicle is configured to monitor the level of inventory within a predefined space. In the case the mobile robot 102 is an autonomous aerial vehicle, then movement of the mobile robot 102 along the trajectory 210 preferably involves flying the autonomous aerial vehicle along the trajectory 210. The trajectory may be stored in a memory as a flight plan for the autonomous aerial vehicle follow (preferably, to autonomously follow) when operated.

According to a further aspect of the present invention there is provided a method for testing a sensor which can measure distance, wherein the sensor is located at a predefined position within a predefined coordinate system, the method comprising the steps of,
(a2) moving a object to a predefined location within the predefined coordinate system;
(b2) using the sensor to measure the distance between the sensor and the object when the object is said predefined location, so that the sensor outputs a distance measurement;
(c2) determining the distance between the object and the sensor by determining the distance between said predefined location of the object within the predefined coordinate system and the predefined position of the sensor within the predefined coordinate system, to provide a determined distance;
(d2) determining the difference between the determined distance with the distance measurement output from the sensor;
(e2) determining that the sensor is functioning as it should if the determined difference is less than, or equal to, a predefined threshold difference.

The method may comprise determining that the sensor is not functioning as it should if the determined difference is greater than the predefined threshold difference. Preferably the sensor is a distance sensor, or a range finder (such as a laser range finder).

Most preferably the method for testing a sensor which can measure distance, wherein the sensor is located at a predefined position within a predefined coordinate system, comprises the steps of,
(a3) moving the object along a trajectory within the predefined coordinate system;
(b3) using the sensor to measure the distance between the sensor and the object as the object is moving along the trajectory, so that the sensor outputs a series of distance measurement, over time;
(c3) determining the location of the object within the predefined coordinate system at at least a first time instant; and determining the distance between the location object at said at least first time instance and the sensor using the determined location of the object within the predefined coordinate system at said at least first time instant and the predefined position of the sensor within the predefined coordinate system, to provide a determined distance;
(d3) determining the difference between the determined distance and the distance measurement output from the sensor at a time instant corresponding to said at least first time instant;
(e3) determining that the sensor is functioning as it should if the determined difference is less than, or equal to, a predefined threshold difference.

The method may comprise determining that the sensor is not functioning as it should if the determined difference is greater than the predefined threshold difference. Preferably the sensor is preferably a distance sensor, or a range finder (such as a laser range finder).

Preferably step (c3) comprises determining the location of the object within the predefined coordinate system over time.

In an embodiment steps (c3)-(e3) may comprise determining respective locations of the object within the predefined coordinate system at a plurality of respective time instants; and determine the distance between the object and the sensor at each respective time instant using the determined location of the object within the predefined coordinate system at that respective time instant and the predefined position of the sensor within the predefined coordinate system, to provide a plurality of determined distances; and for each of the plurality of time instances, determining the difference between the determined distance and distance measurement output from the sensor at that respective time instant, to provide a plurality of respective differences. In an embodiment the method may involve determining that the sensor is functioning as it should if each of the determined differences is less than or equal to, a predefined threshold difference. In a further embodiment the method may involve determining that the sensor is functioning as it should if a predefined threshold proportion (e.g. a threshold percentage) of the determined differences are less than or equal to, a predefined threshold difference. This embodiment allows for some distance measurement outputs to differ from the determined distances, thus allowing for differences which may result due to factors other than failed functioning of the sensor, such as, for example, another subject momentarily coming between the sensor and object as the sensor is measuring the distance to the object.

Determining the location of the object within the predefined coordinate system may be performed using any suitable means. In an embodiment the location of the object within the predefined coordinate system comprises using a first clock and a position determining means to determine the location of the object at any time instant. Preferably the step of determining the location of the object, within the predefined coordinate system comprises using the first clock and a position determining means to determine the location of the object at any time instant during the time period that the object is moving along the trajectory. The positioning determining means may determine the location of the object within the predefined coordinate system, preferably at predefined intervals, and preferably as the object is moving along the trajectory; the time at which each respective location is recorded by the first clock. This creates a history of the past locations occupied by the object (preferably the past locations occupied by the object as the object is moved along the trajectory) and the time at which the object occupied each respective past location.

In a further embodiment the trajectory comprises one or more positions in the predefined coordinate system for the object to move to, and one or more velocities at which the object should move; and the step (c3) of determining the location of the object within the predefined coordinate system, comprises, using a first clock, and a known start time at which the object begins the trajectory, and the trajectory, to determine the location of the object in the predefined coordinate system at any time instant (at at least a first time instant) during the time period that the object is moving along the trajectory. For example, if it is known that the object will begin to move along the trajectory at "2 o'clock" (time on the first clock), and it is known from the trajectory each location of the object within the predefined coordinate system (from a starting location, and all subsequent locations, to an end location), and the velocity at which the object will move to each location, then the location of the object within the predefined coordinate system, at any time (at at least a first time instant), can be determined. Preferably the trajectory comprises a series of locations in the predefined coordinate system for the object to move to, and one or more velocities at which the object should move at each location in the series. In the present disclosure a known start time may be a predefined start time.

It should be understood that in any of the embodiments the position determining means which determines the physical location of the object 102 may take any suitable form. For example, the position determining means may comprise any one or more of , but not limited to: a GPS/GNSS, a local radio-frequency-based positioning (e.g. Wi-Fi or UWB; using time-difference-of-arrival (TDoA) or time-of-arrival (ToA) / time-of-flight (ToF) measurements; Wi-Fi fingerprinting), a vision-based localization (e.g. SLAM or visual-inertial odometry, fiducials, motion-capture systems), or any combination of the aforementioned. In embodiments where the object is a mobile robot, the object preferably is equipped with an appropriate position determining means which may be used for operating the mobile robot but may advantageously be also used to determine the physical location of the object.

It should be noted that in some embodiments the difference in measured distance to the determined distance may be compared to a threshold to determine if the one or more sensors are malfunctioning. In some of said embodiments, this comparison may be conducted by comparing the absolute difference between the measured distance and the determined distance to a threshold. In other of said embodiments, this comparison may be conducted by comparing the difference between the measured distance and the determined distance to a lower and/or upper bound, without first taking the absolute value of said difference.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A method for calibrating a detection range (104) of one or more sensors (105) that are within a predefined coordinate system (100), the method comprising the steps of,
moving an object along a trajectory(101), wherein the trajectory (101) comprises at least a first physical location which is within a predefined estimate (103) of the detection range of the one or more sensors (105), and at least a second physical location which is outside of the predefined estimate (103) of the detection range of the one or more sensors (105);
determining the physical location of the object (102), over time, within the predefined coordinate system (100);
operating the one or more sensors (105) to detect, wherein when the one or more sensors (105) are operated to detect they provide an output, and the output will indicate the presence of the object (105) if the object (102) is within a detection range (104) of the one or more sensors (105);
identifying a time instant (t₂, t₄) at which the one or more sensors (105) no longer detect the object (102), and/or, identifying a time instant (t₁,t₃) at which the one or more sensors (105) begin to detect the object 102;
determining the detection range (104) of the one or more sensors (105) using the physical location (107,118) of the object (102) at a time instant (t₂, t₄) corresponding to the identified time instant (t₂, t₄) at which the one or more sensors no longer detect the object, and/or, determining the detection range (104) of the one or more sensors (105) using the physical location (106,108) of the object 102 at a time instant (t₁, t₃) corresponding to the identified time instant (t₁, t₃) at which the one or more sensors begin to detect the object (102).

2. A method according to claim 1 wherein the method comprises the steps of,
identifying a time instant at which the one or more sensors transition from detecting the object to no longer detecting the object; and
determining the detection range of the one or more sensors using the physical location of the object at a time instant corresponding to the identified time instant at which the one or more sensors transition from detecting the object to no longer detecting the object.

3. A method according to claim 1 or 2 wherein the object is a mobile robot.

4. A method according to claim 1, 2 or 3 wherein the method comprises the steps of,
identifying a time instant at which the one or more sensors transition from not detecting the object to detecting the object; and
determining the detection range of the one or more sensors using the physical location of the object at a time instant corresponding to the identified time instant at which the one or more sensors transition from not detecting the object to detecting the object.

5. A method according to any one of the preceding claims wherein the trajectory comprises a plurality of physical locations each of which are within the predefined estimate of the detection range of the one or more sensors, and a plurality of physical locations each of which are outside of the predefined estimate of the detection range of the one or more sensors; and wherein said plurality of physical locations inside the predefined estimate of the detection range and said plurality of physical locations outside of the predefined estimate of the detection range are distributed so that when the object moves along the trajectory the object will cross a boundary of the predefined estimate of the detection range a plurality of times, and wherein the method comprises,
identifying a plurality of time instants at which the one or more sensors transition from detecting the object to no longer detecting the object, and/or, identifying a plurality of time instants at which the one or more sensors transition from not detecting the object to detecting the object;
for one or more of the identified time instance, determining the detection range of the one or more sensors using the respective physical location(s) of the object at one or more time instants corresponding to said one or more identified time instants.

6. A method according to any one of the preceding claims wherein the detection range is determined from the distance between the one or more sensors and the physical location of the object at the time instant corresponding to said identified time instant.

7. A method according to any one of the preceding claims wherein the one or more sensors comprise, one or more cameras, one or more motion detectors, and/or one or more presence detectors, and/or one or more optical beam smoke detectors and/or one or more proximity sensors.

8. A method according to any one of the preceding claims wherein the trajectory comprises a series of physical locations in the predefined coordinate frame for the object to move to, and one or more velocities at which the object should move; and wherein the step of determining the physical location of the object, over time, comprises using, a first clock, and a known start time at which the object begins the trajectory, and the trajectory, to determine the physical location of the object in the predefined coordinate system at any time instant during the time period that the object is moving along the trajectory.

9. A method according to claim 8 wherein the step of determining the physical location of the object, over time, comprises using a first clock and a position determining means to determine the physical location of the object at any time instant.

10. A method according to claim 8 or 9 wherein a second clock is used to record the time of each detection done by the one or more sensors.

11. A method according to claim 10 wherein a first clock and second clock are synchronized to have the same time, or, to have a fixed known time difference.

12. A method according to claim 11 wherein the method further comprises the step of slowing the velocity at which the object moves along the trajectory if there is an undeterminable and/or drifting difference between the time on the first clock and the time on the second clock.

13. A method according to any one of claims 10-12 wherein the first clock and second clock may be different clocks, or, wherein the first clock and second clock are the same clock so that only one single clock is used.

14. A method according to any one of the preceding claims wherein the one or more sensors are located in a predefined location within the predefined coordinate system.

15. A method according to any one of the preceding claims wherein the shape of the detection range of the one or more sensor is a predefined shape, and the method further comprises the step of, determining the location of the one or more sensors within the predefined coordinate system using the predefined shape of the detection range and an output of the one or more sensors.

16. A method according to any one of the preceding claims wherein the trajectory is a trajectory which causes the object to cross a boundary of the detection range in at least three different locations within the predefined coordinate system; and wherein the method further comprises the steps of,
determining the location within the predefined coordinate system of at least three points on the boundary of the detection range corresponding to the locations where the object crossed the boundary of the detection range; and
using the location of the at least three points and the predefined shape of the detection range, to determine the location of the one or more sensors within the predefined coordinate system.

17. A method according to any one of the preceding claims wherein the method further comprises comparing the determined detection range with a predefined target detection range to determine if the predefined target detection range is fully contained within the determined detection range.

18. A method according to any one of the preceding claims wherein the trajectory is defined by a trajectory which the object follows when carrying out a predefined task.

19. A method according to claim 18 wherein the predefined task comprises at least one or, carrying out inventory management, and/or moving items and/or delivering items.

20. A method according to any one of the preceding claims wherein the method further comprises comparing the determined detection range to a predefined threshold range.

21. A method according to claim 20 wherein the method further comprises determining that the sensor is insufficient or faulty, if the determined detection range is less than the predefined threshold range; and/or determining that the sensor is sufficient or without fault, if the determined detection range is greater than the predefined threshold.

22. A method according to any one of the preceding claims wherein the object is an autonomous aerial vehicle.

23. A method according to claim 22 wherein the object is an autonomous aerial vehicle which is part of an inventory management system, wherein the autonomous aerial vehicle is configured to monitor the level of inventory within a predefined space.

24. A method according to any one of the preceding claims wherein the predefined coordinate system is a three-dimensional coordinate system having an x,y and z axes.

25. A method according to any one of the preceding claims wherein the method further comprises repeating the steps of claim 1 one or more times.

26. A method according to claim 25 wherein the steps of claim 1 are repeated at predefined time intervals.

27. A method for testing an optical beam smoke detector, comprising the steps of,
moving an object (102) along a trajectory (210), wherein the trajectory (210) intersects a smoke detection optical beam (203) emitted by the optical beam smoke detector (201);
detecting if a smoke alarm of the optical beam smoke detector (201) is triggered when the object (102) intersects the smoke detection optical beam (203).

28. A method according to claim 27 wherein the method comprises repeating the steps of claim 27 at predefined intervals to regularly test the optical beam smoke detector.

29. A method according to any one of claims 27-28 wherein the object is a mobile robot.

30. A method according to any one of claims 27-29 wherein the object is an autonomous aerial vehicle.

31. A method according to claim 30 wherein the mobile robot is an autonomous aerial vehicle which is part of an inventory management system, wherein the autonomous aerial vehicle is configured to monitor the level of inventory within a predefined space.

32. A method for testing a sensor which can measure distance, wherein the sensor is located at a predefined position within a predefined coordinate system, the method comprising the steps of,
moving an object to a predefined location within the predefined coordinate system;
using the sensor to measure the distance between the sensor and the object when the object is at said predefined location, so that the sensor outputs a distance measurement;
determining the distance between the object and the sensor by determining the distance between said predefined location of the object within the predefined coordinate system and the predefined position of the sensor within the predefined coordinate system, to provide a determined distance;
determining the difference between the determined distance with the distance measurement output from the sensor;
determining that the sensor is functioning as it should if the determined difference is less than, or equal to, a predefined threshold difference.

33. A method for testing a sensor which can measure distance, wherein the sensor is located at a predefined position within a predefined coordinate system, the method comprising the steps of,
moving an object along a trajectory within the predefined coordinate system;
using the sensor to measure the distance between the sensor and the object as the object is moving along the trajectory, so that the sensor outputs a series of distance measurement, over time;
determining the location of the object within the predefined coordinate system at at least a first time instant;
determining the distance between the location object at said at least first time instance and the sensor using the determined location of the object within the predefined coordinate system at said at least first time instant and the predefined position of the sensor within the predefined coordinate system, to provide a determined distance;
determining the difference between the determined distance and the distance measurement output from the sensor at a time instant corresponding to said at least first time instant;
determining that the sensor is functioning as it should if the determined difference is less than, or equal to, a predefined threshold difference.

34. The method according to claim 33 comprising, determining respective locations of the object within the predefined coordinate system at a plurality of respective time instants; and
determining the distance between the object and the sensor at each respective time instant using the determined location of the object within the predefined coordinate system at that respective time instant and the predefined position of the sensor within the predefined coordinate system, to provide a plurality of determined distances; and
for each of the plurality of time instances, determining the difference between the determined distance and distance measurement output from the sensor at that respective time instant, to provide a plurality of respective differences.

35. The method according to claim 34 comprising, determining that the sensor is functioning as it should if each of the determined differences is less than or equal to, a predefined threshold difference.

36. The method according to claim 34 comprising, determining that the sensor is functioning as it should if a predefined threshold proportion of the determined differences are less than or equal to, a predefined threshold difference.
